# EUROPÄISCHE PATENTANMELDUNG

(11) **EP 4 265 161 A1**
(43) Veröffentlichungstag der Anmeldung: **25.10.2023**
(21) Anmeldenummer: 22168936.7
(22) Anmeldetag: 20.04.2022
(51) Int. Cl.: A47J 36/38, A47J 43/046, F24C 15/20

(54) **MOBILE DUNSTABZUGSHAUBE, SYSTEM UND VERFAHREN**

(71) Anmelder: Vorwerk & Co. Interholding GmbH, 42270 Wuppertal (DE)
(72) Erfinder: LAKSHMANAN, Peter, 44225 Dortmund (DE)
(74) Vertreter: Gille Hrabal Partnerschaftsgesellschaft mbB Patentanwälte

(57) **Zusammenfassung**

Die Erfindung betrifft eine mobile Dunstabzugshaube (1) mit einem Gehäuse (2, 4, 6), einem Filter (34) und einer Saugeinrichtung (35, 36), wobei Filter (34) und Saugeinrichtung (35, 36) im Gehäuse (2, 4, 6) angeordnet sind, wobei das Gehäuse (2, 4, 6) einen Einlass (5) für Luft aufweist, wobei die Saugeinrichtung (35, 36) so eingerichtet ist, dass die Saugeinrichtung (35, 36) Luft von außen durch den Lufteinlass (5) und durch das Filter (34) hindurch fördern kann, dadurch gekennzeichnet, dass die Dunstabzugshaube (1) länger als hoch und breit ist und nicht länger als 60 cm oder nicht länger als 50 cm oder nicht länger als 40 cm ist.

Die Erfindung betrifft außerdem ein System und ein Verfahren.

## Beschreibung

Die Erfindung betrifft eine mobile Dunstabzugshaube mit einem Gehäuse, einem Filter und einer Saugeinrichtung. Das Filter und die Saugeinrichtung sind im Gehäuse angeordnet. Das Gehäuse weist ein Gitter auf. Die Saugeinrichtung ist so eingerichtet, dass die Saugeinrichtung Luft von außen durch das Gitter und durch das Filter hindurch saugen kann. Die Erfindung betrifft außerdem ein System und ein Verfahren.

In einer Küche entstehen durch das Kochen und Braten von Lebensmitteln Dünste. Um mit den Dünsten verbundene Gerüche und Fettablagerungen zu vermeiden, sind Dunstabzugshauben vorgesehen. Durch eine Dunstabzugshaube wird der durch das Kochen und Braten entstehende Dunst mithilfe der Saugeinrichtung abgesaugt und und zwar durch das Filter hindurch. Fettablagerungen, Gerüche und/oder Feuchtigkeit können so in einer Küche vermieden oder zumindest reduziert werden.

Es gibt in Küchen stationär montierte Kochfelder für das Kochen und Braten von Lebensmitteln in Töpfen und Pfannen. Oberhalb von solchen Kochfeldern können Dunstabzugshauben an einer Wand oder einem Küchenschrank stationär montiert sein. Die Größe einer solchen Dunstabzugshaube ist grundsätzlich an die Maße eines Kochfelds angepasst. Eine stationär montierte Dunstabzugshaube kann ohne Werkzeug nicht mehr gelöst und an einem anderen Ort eingesetzt werden.

In einer Küche kann es nicht nur stationär montierte Kochfelder für das Kochen und Braten von Lebensmitteln geben, sondern zusätzlich mobile Speisenzubereitungsgeräte wie zum Beispiel Küchenmaschinen mit einem beheizbaren Speisenzubereitungsgefäß. Ein solches mobiles Speisenzubereitungsgerät kann in einer Küche flexibel aufgestellt werden, da dieses nicht zum Beispiel an einer Wand oder einem Schrank befestigt ist. Der Aufstellungsort kann daher jederzeit problemlos geändert werden. Eine Verwendung von Werkzeug ist dafür nicht erforderlich.

Da für das Erhitzen von Lebensmitteln vorgesehene mobile Speisenzubereitungsgeräte außerhalb von Kochfeldern zu platzieren sind, erfasst eine stationär montierte Dunstabzugshaube Dünste von mobilen Speisenzubereitungsgeräten nicht oder nur unzureichend.

Es ist Aufgabe der Erfindung, Gerüche, Fettabscheidungen und/oder Feuchtigkeit, die aufgrund des Betriebs eines mobilen Speisenzubereitungsgeräts entstehen können, verbessert zu vermeiden.

Die Aufgabe wird durch eine Dunstabzugshaube mit den Merkmalen des ersten Anspruchs gelöst. Vorteilhafte Ausgestaltungen ergeben sich aus den abhängigen Ansprüchen. Ein System umfasst zur Lösung der Aufgabe die Merkmale des ersten Nebenanspruchs. Ein Verfahren umfasst zur Lösung der Aufgabe die Merkmale des zweiten Nebenanspruchs.

Zur Lösung der Aufgabe umfasst eine mobile Dunstabzugshaube ein Gehäuse, ein Filter und eine Saugeinrichtung. Filter und Saugeinrichtung sind im Gehäuse angeordnet. Das Gehäuse weist einen Einlass für Luft auf. Die Saugeinrichtung ist so eingerichtet, dass die Saugeinrichtung Luft von außen durch den Lufteinlass und durch das Filter hindurch strömen lassen kann. Die Dunstabzugshaube kann länger als hoch und breit sein. Die Dunstabzugshaube kann nicht länger als 60 cm, vorzugsweise nicht länger als 50 cm, besonders bevorzugt nicht länger als 40 cm, sein.

Das Gehäuse ist eine das Filter und die Saugeinrichtung schützende Hülle. Das Gehäuse kann daher aus einem festen Material wie zum Beispiel Metall und/oder einem Kunststoff bestehen. Das Gehäuse trägt zur Steuerung eines Luftstroms bei. Es gibt daher im Gehäuse einen Einlass für Luft und einen Auslass für Luft. Der Einlass und/oder der Auslass können durch ein Gitter oder ein Sieb vor einem Hindurchgreifen geschützt sein.

Das Filter ist eine Einrichtung, die Bestandteile aus einem Luftstrom zurückhält, wenn die Luft durch das Filter strömt. Das Filter kann insbesondere Fett, Öl und/oder Dampf zurückhalten. Das Filter kann ein oder mehrere Filterelemente umfassen. Filterelemente können in Strömungsrichtung gesehen hintereinander angeordnet sein. Es kann dann ein erstes Filterelement von Luft durchströmt werden, danach ein zweites, usw.. Filterelemente eines Filters können verschieden sein.

Die Saugeinrichtung kann einen Luftstrom erzeugen. Die Saugeinrichtung kann ein Laufrad umfassen, das durch einen Motor angetrieben wird. Das Laufrad kann ein Rad mit daran befestigten Flügeln sein. Durch Drehen des Laufrads wird der Luftstrom erzeugt. Der Motor kann ein Elektromotor sein. Die Saugeinrichtung kann eine Regeleinheit umfassen, mit der die Drehzahl des Elektromotors geregelt werden kann.

Die Maße der Dunstabzugshaube können so sein, dass die Dunstabzugshaube beispielsweise hochkant neben einem Speisenzubereitungsgefäß aufgestellt werden kann, ohne dafür eine übermäßig große Stellfläche zu benötigen. Die Dunstabzugshaube kann daher geeignet und flexibel in einer Küche verwendet werden, ohne als übermäßig störend empfunden zu werden.

Die Dunstabzugshaube kann eine Befestigungseinrichtung umfassen, mit der die Dunstabzugshaube an einem Speisenzubereitungsgefäß, an einem Speisenzubereitungsgerät oder an einer Wand lösbar befestigt werden kann. Dadurch kann die Dunstabzugshaube weiter verbessert in einer Küche flexibel verwendet werden, um Dunst von einem Speisenzubereitungsgefäß abzusaugen.

Die Befestigungseinrichtung kann eine Klammer oder ein Saugnapf sein oder umfassen.

Eine an der Dunstabzugshaube lösbar oder unlösbar angebrachte Klammer kann beispielsweise an einem Rand eines Speisenzubereitungsgefäßes lösbar befestigt werden. Die Dunstabzugshause kann dann unmittelbar benachbart beim Austrittsbereich von Dunst angeordnet werden. Die Dunstabzugshaube kann dann optimiert Dunst absaugen. Das Speisenzubereitungsgefäß kann ein Kochtopf oder eine Pfanne sein. Das Speisenzubereitungsgefäß kann Teil einer Küchenmaschine sein.

Eine an der Dunstabzugshaube lösbar oder unlösbar angebrachte Klammer kann beispielsweise an einem nach oben abstehenden Kragen oder Steg eines Deckelteils eines Speisenzubereitungsgefäßes lösbar befestigt werden. Die Dunstabzugshause kann dann unmittelbar benachbart beim Austrittsbereich von Dunst angeordnet werden. Die Dunstabzugshaube kann dann optimiert Dunst absaugen.

Eine an der Dunstabzugshaube lösbar oder unlösbar angebrachte Klammer kann beispielsweise an einem Griff eines Speisenzubereitungsgeräts lösbar befestigt werden. Dies gilt vor allem dann, wenn der Griff sich in der Nähe eines Dunstaustrittsbereichs des Speisenzubereitungsgeräts befindet. Der Griff kann ein Griff eines Standteils einer Küchenmaschine sein. Eine Küchenmaschine umfasst ein Speisenzubereitungsgefäß, das in das Standteil eingesetzt werden kann.

Mit "lösbar" ist gemeint, dass ohne Verwendung von Werkzeug eine Verbindung zerstörungsfrei gelöst werden kann. Eine unlösbare Verbindung liegt vor, wenn die Verbindung nur durch Zerstörung der Verbindung gelöst werden kann oder aber wenn Werkzeug eingesetzt werden muss, um die Verbindung zu lösen.

Ein an der Dunstabzugshaube lösbar oder unlösbar angebrachter Saugnapf kann an einer glatten Oberfläche lösbar befestigt werden, so zum Beispiel auf Fliesen einer Wand. Auch dies trägt dazu bei, die Dunstabzugshaube in einer Küche flexibel und geeignet anordnen zu können, ohne dass die Dunstabzugshaube übermäßig stören würde.

Die Befestigungseinrichtung kann einen Haken, einen Rastmechanismus und/oder einen Magneten umfassen, um die Dunstabzugshaube geeignet und flexibel in einer Küche in der Nähe eines Dunstaustrittsbereichs lösbar befestigen zu können. Eine Befestigungseinrichtung kann so sein, dass diese durch ein oder mehrere Formschlusselemente an einem Speisenzubereitungsgerät angebracht werden kann. Ein Formschlusselement kann beispielsweise in ein Loch eines Speisenzubereitungsgerät hineingesteckt werden, um so eine Verbindung zu schaffen, die dazu beiträgt, die Dunstabzugshaube in gewünschter Stellung an dem Speisenzubereitungsgerät anzubringen. Ein Formschlusselement kann dann auch kraftschlüssig gehalten sein.

Die Dunstabzugshaube kann eine magnetisierbare Metallplatte umfassen, die daher magnetisch gehalten werden kann. Die Metallplatte besteht beispielsweise aus ferromagnetischem Material. Umfasst beispielsweise ein Speisenzubereitungsgerät einen dafür geeignet angeordneten Magneten, dann kann die Dunstabzugshaube durch diesen Magneten an dem Speisenzubereitungsgerät gehalten werden.

Eine Befestigungseinrichtung kann eine Klammer, einen Saugnapf, einen Magneten, und/oder einen Haken umfassen, mit der die Befestigungseinrichtung lösbar an der Dunstabzugshaube angebracht werden kann. Eine Befestigungseinrichtung kann ein Gewinde umfassen, mit dem die Befestigungseinrichtung an der Dunstabzugshaube angebracht sein kann.

Die Dunstabzugshaube kann ein Einschubfach für eine Befestigungseinrichtung umfassen. Es können verschiedene Befestigungseinrichtungen vorhanden sein, die wahlweise in das Einschubfach hineingeschoben werden können, um in Abhängigkeit vom Bedarf eine für den jeweiligen Bedarfsfall geeignete Befestigungseinrichtung einsetzen zu können. Eine Befestigungseinrichtung kann in dem Einschubfach beispielsweise durch einen lösbaren Rastmechanismus oder mithilfe einer magnetischen Verbindung vor einem unplanmäßigen Herausfallen geschützt sein. Unterschiedliche Befestigungseinrichtungen können wahlweise auch auf andere Weise austauschbar an dem Gehäuse der Dunstabzugshaube befestigt werden, so zum Beispiel durch eine lösbare Schnappverbindung und damit durch eine Formschlussverbindung. Ein Bajonettverschluss ist ebenfalls möglich, um eine Befestigungseinrichtung austauschbar mit dem Gehäuse der Dunstabzugshaube verbinden zu können.

Eine Befestigungseinrichtung kann stoffschlüssig an der Befestigungseinrichtung und damit unlösbar angebracht sein.

Die Befestigungseinrichtung kann schwenkbar und/oder drehbar an dem Gehäuse der Dunstabzugshaube angebracht sein oder angebracht werden. Im Anschluss an eine Befestigung der Dunstabzugshaube kann die Dunstabzugshaube dann verschwenkt und/oder gedreht werden. Dadurch kann die Dunstabzugshaube nach ihrer Befestigung ausgerichtet werden, um weiter verbessert störenden Dunst absaugen zu können.

Die Befestigungseinrichtung kann an einer luftdichten Gehäusewand der Dunstabzugshaube befestigt sein. Die Befestigungseinrichtung wird so vor angesaugtem Dunst abgeschirmt. Eine Verschmutzung der Befestigungseinrichtung und eine damit verbundene Beeinträchtigung können so vermieden werden.

Die Wand, die der Gehäusewand mit der daran befestigten Befestigungseinrichtung gegenüberliegt, kann einen Luftauslass oder einen Lufteinlass umfassen. Die Befestigungseinrichtung kann aufgrund der Entfernung zum Luftauslass bzw. dem Lufteinlass weiter verbessert vor einem dunsthaltigen Luftstrom abgeschirmt werden. Eine Verschmutzung der Befestigungseinrichtung und eine damit verbundene Beeinträchtigung können so weiter verbessert vermieden werden.

Weitere Wände der Dunstabzugshaube können einen Lufteinlass oder einen Luftauslass aufweisen.

Eine Wand der Dunstabzugshaube kann einen Lufteinlass umfassen und eine daran angrenzende Wand einen Luftauslass. Die beiden Wände können beispielsweise einen Winkel von 40° bis 140° einschließen. Es ist dann möglich, Dunst seitlich abzusaugen und nach Passieren des Filters die zugehörige Luft nach oben auszublasen. Es kann so eine sehr gute Wirkung erzielt werden. Ein nach oben ausgeblasener Luftstrom wird als wenig störend empfunden.

Eine oder die beiden Stirnseiten des Gehäuses der Dunstabzugshaube können luftdicht sein. Da diese dann keinen Lufteinlass oder Luftauslass umfassen, können die Stirnseiten dann vorteilhaft als Stellfläche genutzt werden, um die Dunstabzugshaube hochkant und damit besonders geeignet aufstellen zu können.

Die Dunstabzugshaube kann wenigstens doppelt so lang wie hoch sein und/oder wenigstens doppelt so lang wie breit sein. Die Dunstabzugshaube kann beispielsweise in etwa dreimal so lang wie hoch sein und/oder in etwa dreimal so lang wie breit sein. Es stehen dann langgestreckte Flächen für Lufteinlass und/oder Luftauslass zur Verfügung, um besonders geeignet Dunst absaugen zu können.

Die Dunstabzugshaube kann maximal 30 cm, bevorzugt maximal 20 cm oder maximal 15 cm breit sein. Die Dunstabzugshaube kann maximal 30 cm, bevorzugt maximal 20 cm oder maximal 15 cm hoch sein. Die Dunstabzugshaube kann dann besonders einfach gehandhabt und auch in einer Küchenschublade unproblematisch gelagert werden.

Die Dunstabzugshaube kann einen ausziehbaren Standfuß umfassen. Der Standfuß kann dann zwischen einer Ausgangsstellung und einer Endstellung hin und her bewegt werden. Die Höhe einer auf dem Standfuß aufgestellten Dunstabzugshaube kann dann eingestellt werden, um Dunst in optimierter Weise absaugen zu können. Es kann einen Rastmechanismus oder Klemmmechanismus geben, um den Standfuß in einer herausgezogenen gewünschten Stellung so halten zu können, dass die Dunstabzugshaube in einer gewünschten Höhe angeordnet werden kann. Der Standfuß kann beispielsweise durch eine vorgespannte Feder in der Endstellung gehalten werden.

Der Standfuß kann an einer Stirnseite der Dunstabzugshaube angeordnet sein. Die Dunstabzugshaube kann dann vorteilhaft hochkant aufgestellt und außerdem die Höhe eingestellt werden, um die Dunstabzugswirkung zu optimieren. Der Standfuß kann an aber auch einer Seitenwand der Dunstabzugshaube angeordnet sein. Die Dunstabzugshaube kann dann beispielsweise horizontal mithilfe des Standfußes aufgestellt und ggfs. auch in einer gewünschten Höhe angeordnet werden.

Die Dunstabzugshaube kann einen Ständer umfassen, um die Dunstabzugshaube geeignet aufstellen zu können. Der Ständer kann unlösbar oder lösbar mit dem Gehäuse der Dunstabzugshaube verbunden sein.

Die Dunstabzugshaube kann einen Feuchtigkeitssensor, einen Temperatursensor, einen Drucksensor, einen Gassensor und/oder einen Abstandssensor umfassen. Solche Sensoren können genutzt werden, um den Betrieb der Dunstabzugshaube zu optimieren.

Dunst kann mit einer erhöhten Feuchtigkeit einhergehen. Daher kann durch einen Feuchtigkeitssensor unerwünschter Dunst detektiert werden. In Abhängigkeit davon kann der Betrieb der Dunstabzugshaube gesteuert werden. So kann die Dunstabzugshaube automatisiert ein- und / oder ausgeschaltet werden, wenn Dunst durch eine erhöhte Feuchtigkeit detektiert wird. Die Leistung der Saugeinrichtung kann in Abhängigkeit von der detektierten Feuchtigkeit und damit in Abhängigkeit vom Bedarf für das Absaugen von Dunst geregelt werden. Mit zunehmender detektierter Feuchtigkeit kann die Leistung der Saugeinrichtung automatisiert erhöht werden. Die Dunstabzugshaube kann entsprechend eingerichtet sein.

Dunst kann mit einer erhöhten Temperatur einhergehen. Daher kann durch einen Temperatursensor unerwünschter Dunst detektiert werden. In Abhängigkeit davon kann der Betrieb der Dunstabzugshaube gesteuert werden. So kann die Dunstabzugshaube automatisiert ein- und / oder ausgeschaltet werden, wenn Dunst durch eine erhöhte Temperatur detektiert wird. Die Leistung der Saugeinrichtung kann in Abhängigkeit von der detektierten Temperatur und damit in Abhängigkeit vom Bedarf für das Absaugen von Dunst geregelt werden. Mit zunehmender detektierter Temperatur kann die Leistung der Saugeinrichtung automatisiert erhöht werden. Die Dunstabzugshaube kann entsprechend eingerichtet sein.

Dunst kann mit einer Gaszusammensetzung einhergehen, die von üblicher Luft abweicht. Daher kann durch einen Gassensor unerwünschter Dunst detektiert werden. In Abhängigkeit davon kann der Betrieb der Dunstabzugshaube gesteuert werden. So kann die Dunstabzugshaube automatisiert ein- und / oder ausgeschaltet werden, wenn Dunst durch einen Gassensor detektiert wird. Die Leistung der Saugeinrichtung kann in Abhängigkeit von der detektierten Gaszusammensetzung und damit in Abhängigkeit vom Bedarf für das Absaugen von Dunst geregelt werden. Mit zunehmender detektierter Abweichung von üblicher Luft kann die Leistung der Saugeinrichtung automatisiert erhöht werden. Die Dunstabzugshaube kann entsprechend eingerichtet sein.

Durch einen Abstandssensor kann die Entfernung zu einem Speisenzubereitungsgefäß detektiert werden, aus dem Dunst austreten kann. Die Leistung der Saugeinrichtung kann in Abhängigkeit von einem detektierten Abstand und damit in Abhängigkeit vom Bedarf für das Absaugen von Dunst geregelt werden. Mit zunehmendem detektiertem Abstand kann die Leistung der Saugeinrichtung automatisiert erhöht werden. Die Dunstabzugshaube kann entsprechend eingerichtet sein. Ein Abstandssensor kann durch Lidar realisiert sein. Als Abstandsensor kann eine Kamera dienen. Mithilfe von NFC kann eine Abstandsmessung realisiert werden.

Ein Abstand kann über die Auswertung der Stärke eines Funksignals ermittelt werden. Die Dunstabzugshaube kann ein Funksignal an ein Speisenzubereitungsgerät senden. Das Speisenzubereitungsgerät kann die Signalstärke auswerten und so den Abstand ermitteln. Ein Abstand kann beispielsweise mithilfe von hinterlegten Referenzwerten von dem Speisenzubereitungsgerät ermittelt werden. Die Referenzwerte können im Speisenzubereitungsgerät oder in der Dunstabzugshaube gespeichert sein.

Das Speisenzubereitungsgerät kann so beschaffen und eingerichtet sein, dass dieses den Betrieb der Dunstabzugshaube steuern kann. Das Speisenzubereitungsgerät kann so beschaffen sein, dass dieses die Dunstabzugshaube ein- und ausschalten kann. Das Speisenzubereitungsgerät kann so beschaffen sein, dass dieses die Leistung der Saugeinrichtung einstellen kann, so zum Beispiel eine Motordrehzahl eines Gebläses der Dunstabzugshaube. Das Speisenzubereitungsgerät kann so beschaffen sein, dass dieses eine große Leistung der Saugeinrichtung der Dunstabzugshaube einstellt, wenn ein großer Abstand zwischen Speisenzubereitungsgerät und Dunstabzugshaube detektiert wurde und eine im Vergleich dazu kleine Leistung, wenn ein kleiner Abstand detektiert wurde.

Durch einen Drucksensor können Druckverluste von durch die Dunstabzugshaube strömender Luft detektiert werden. Es kann so beispielsweise der Zustand des Filters detektiert werden, um den Bedarf für einen Austausch des Filters bzw. eines Filterelements zum Beispiel optisch und/oder akustisch zu signalisieren.

Die Dunstanzugshaube kann also so eingerichtet sein, dass der Betrieb der Dunstanzugshaube und/oder ihre Wartung in Abhängigkeit von ein oder mehreren Messwerten von einem oder mehreren Sensoren gesteuert werden kann.

Die Dunstabzugshaube kann eine Funkeinheit für ein drahtloses Senden und/oder Empfangen von Daten umfassen. Als Funkprotokoll können beispielsweise WiFi, Bluetooth, Thread, z-Wave und/ oder ZigBee vorgesehen sein. Über die Funkeinheit kann der Betrieb der Dunstabzugshaube beispielsweise durch ein externes Gerät gesteuert werden. Über die Funkeinheit können Daten der Dunstabzugshaube oder Informationen über die Dunstabzugshaube beispielsweise an ein externes Gerät gesendet werden. Es können beispielsweise Wartungsinformationen und/oder Zustandsinformationen an ein externes Gerät gesendet werden. Es kann beispielsweise eine Information versendet werden, sobald das Filter oder ein Filterelement des Filters auszutauschen ist. Es kann beispielsweise eine Information über einen Druckverlust versendet werden, der durch das Filter verursacht wird. Es kann beispielsweise eine Information über eine noch mögliche Nutzungsdauer des Filters versendet werden, die beispielsweise anhand von ermitteltem Druckverlust und/oder anhand der Motorlaufzeit seit dem letzten Filterwechsel abgeschätzt werden kann.

Ein Druckverlust kann unmittelbar durch einen Drucksensor gemessen werden. Ein Druckverlust kann aber auch indirekt aus Strom, Spannung und Motordrehzahl der Saugeinrichtung ermittelt werden.

Das externe Gerät kann ein Mobiltelefon mit einer drauf installierten, für die Dunstabzugshaube vorgesehenen Software sein. Das externe Gerät kann ein Speisenzubereitungsgerät wie zum Beispiel eine Küchenmaschine sein.

Das Speisenzubereitungsgerät kann so eingerichtet sein, dass dieses zumindest teilautomatisiert eine Speise mithilfe eines elektronisch gespeicherten Rezepts zubereiten kann. Das Rezept kann eine Steuerung für die Dunstabzugshaube umfassen. Die Dunstabzugshaube kann in der durch das Rezept vorgegebenen Weise während der Zubereitung einer Speise eingestellt werden. Das Einstellen kann automatisiert oder manuell geschehen.

Der Betrieb der Dunstabzugshaube kann zeitabhängig gesteuert werden. Wird beispielsweise eine Speise per Rezept teilautomatisiert zubereitet, dann kann die Dunstabzugshaube beispielsweise ab Beginn der teilautomatisierten Zubereitung zeitabhängig betrieben werden. Die Dunstabzugshaube kann also zeitgesteuert ein- und/oder ausgeschaltet werden. Die Leistung der Dunstabzugshaube kann zeitgesteuert eingestellt werden.

Die Dunstabzugshaube kann eine Batterie umfassen, um unabhängig von einer stationär montierten Stromquelle betrieben werden zu können.

Die Leistung der Saugeinrichtung kann beispielsweise in mehreren Stufen manuell und/ oder automatisiert einstellbar sein. Es können beispielsweise zwei, drei oder vier Stufen eingestellt werden. Die Leistung der Saugeinrichtung kann beispielsweise stufenlos manuell und / oder automatisiert einstellbar sein. Die Dunstabzugshaube kann eine Eingabeeinrichtung umfassen, mit der eine Drehzahl der Saugeinrichtung manuell eingestellt werden kann.

Das Filter kann ein Streckmetallfilter sein oder umfassen. Das Filter kann so beschaffen sein, dass sein Fettabscheidegrad mehr als 75% beträgt. Der Fettabscheidegrad kann fast 100% betragen, so zum Beispiel 98%.

Das Filter kann ein Papierfilter sein oder umfassen. Das Papier muss nach Sättigung ausgetauscht werden.

Das Filter kann ein Vliesfilter sein oder umfassen. Das Vliesfilter kann aus einer Lage Vlies bestehen, die wenige Millimeter dick ist. Ein Vliesfilter muss nach seiner Sättigung ausgetauscht werden.

Das Filter kann ein Labyrinthfilter sein oder umfassen. Im Labyrinthfilter wird der Luftstrom mäanderförmig um entsprechend ausgebildete Elemente geleitet. Dabei scheidet sich das Fett oder Öl an den Oberflächen der Elemente ab. Ein Labyrinthfilter kann ein oder mehrere Rinnen umfassen, in den sich abgeschiedenes Öl oder Fett sammeln können.

Das Filter kann eine Filterschüttung enthalten, also einen partikulären Feststoff, der insbesondere eine große innere Oberfläche aufweist. Das Filter kann ein oder mehrere Filterelemente enthalten, der oder die von Kanälen durchzogen sein können. Das Filter kann einen Tiefenfilter und/oder einen Oberflächenfilter enthalten. Das Filter kann einen ggf. porösen Festkörper enthalten, der Strömungskanäle enthalten kann.

Die Fläche des Filters ist vorzugsweise wenigstens so groß wie die Eintrittsfläche des Lufteinlasses. Das Filter befindet sich in Strömungsrichtung gesehen hinter dem Lufteinlass. Das Filter grenzt vorzugsweise an den Lufteinlass an. Das Filter kann benachbart zu einem Gitter oder einem Sieb des Lufteinlasses angrenzen.

Die Erfindung betrifft auch ein System mit einer Dunstabzugshaube und einem Speisenzubereitungsgerät. Die Dunstabzugshaube kann an dem Speisenzubereitungsgerät lösbar befestigt sein oder lösbar befestigt werden. Die Dunstabzugshaube kann wie zuvor beschrieben beschaffen sein.

Das Speisenzubereitungsgerät und die Dunstabzugshaube können so eingerichtet sein, dass der Betrieb der Dunstabzugshaube über das Speisenzubereitungsgerät gesteuert werden kann. Das Speisenzubereitungsgerät kann eine Küchenmaschine sein. Mit Küchenmaschine ist ein Speisenzubereitungsgerät gemeint, das ein Standteil und ein in eine Aufnahme des Standteil einsetzbares Speisenzubereitungsgefäß umfasst. Es gibt ein Misch- und/oder Schneidwerkzeug, mit dem Lebensmittel in dem Speisenzubereitungsgefäß gemischt und / oder zerkleinert werden können. Die Küchenmaschine umfasst eine Heizeinrichtung, mit der Lebensmittel in dem Speisenzubereitungsgefäß erhitzt werden können.

Das Speisenzubereitungsgerät kann so eingerichtet sein, dass das Speisenzubereitungsgerät auf ein elektronisch gespeichertes Rezept zugreifen kann. Das Speisenzubereitungsgerät kann beispielsweise die Dunstabzugshaube in Abhängigkeit von dem elektronisch gespeicherten Rezept steuern. Beispielsweise kann das Rezept Informationen zur Steuerung der Dunstabzugshaube umfassen, die dann das Speisenzubereitungsgerät veranlassen, die Dunstabzugshaube gemäß diesen Informationen zu steuern.

Die Erfindung betrifft auch ein Verfahren für die Zubereitung einer Speise, gemäß dem eine Dunstabzugshaube an einem Speisenzubereitungsgerät lösbar angebracht wird. Nach dem lösbaren Anbringen wird eine Speise durch das Speisenzubereitungsgerät durch Erhitzen zubereitet. Bei Bedarf kann dann die Dunstabzugshaube automatisiert oder manuell in Betrieb gesetzt werden. Zum Beispiel nach der Zubereitung der Speise kann die Dunstabzugshaube von dem Speisenzubereitungsgerät wieder gelöst werden.

Nachfolgend wird die Erfindung mithilfe von Figuren näher erläutert. Es zeigen:
- Figur 1:: Dunstabzugshaube;
- Figur 2:: Küchenmaschine;
- Figur 3:: Küchenmaschine mit angebrachter Dunstabzugshaube;
- Figur 4:: Küchenmaschine mit angebrachter Dunstabzugshaube;
- Figur 5:: Küchenmaschine mit angebrachter Dunstabzugshaube;
- Figur 6:: Stirnseite einer Dunstabzugshaube mit Standfuß;
- Figur 7:: auf Standfuß aufgestellte Dunstabzugshaube;
- Figur 8:: Dunstabzugshaube mit Einschubfach;
- Figur 9:: Schnittdarstellung durch Dunstabzugshaube;
- Figur 10:: Dunstabzugshaube mit Standfuß.

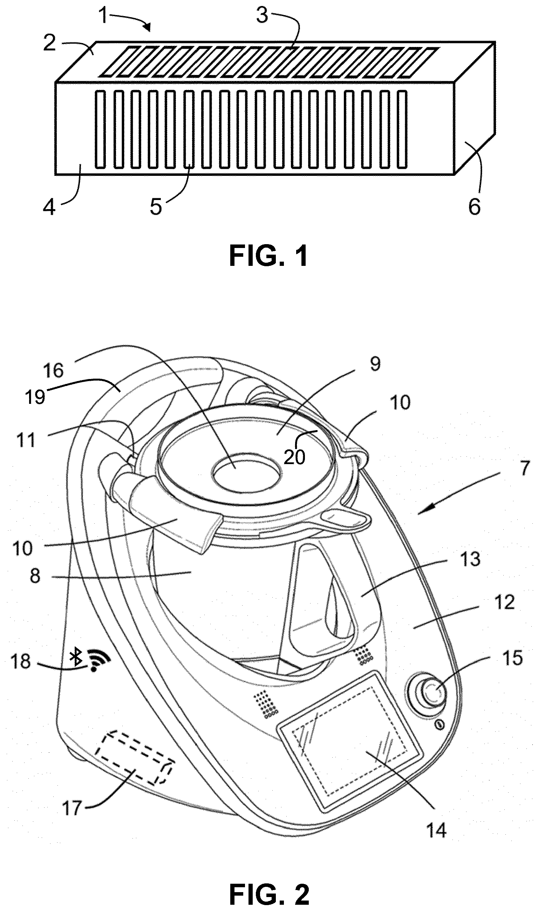

Die Figur 1 zeigt eine mobile Dunstabzugshaube 1. Das Gehäuse der Dunstabzugshaube 1 weist eine Wand 2 mit einem Luftauslass in Form von einem Gitter 3 auf. Von der Dunstabzugshaube 1 angesaugte Luft kann also die Dunstabzugshaube 1 durch das Gitter 3 hindurch verlassen. Eine Wand 4 des Gehäuses weist einen Lufteinlass in Form von einem Gitter 5 auf. Von der Dunstabzugshaube 1 angesaugte Luft kann über das Gitter 5 in das Gehäuse der Dunstabzugshaube 1 hineingesaugt werden. Die Wände 2 und 4 grenzen aneinander an. Die Wände 2 und 4 schließen zumindest näherungsweise einen rechten Winkel ein.

Die Dunstabzugshaube 1 weist zwei gegenüberliegende Stirnseiten 6 auf. Die Stirnseiten 6 können quadratisch sein oder zumindest näherungsweise quadratisch. Dann entspricht die Höhe einer Stirnseite 6 der Breite der Stirnseite 6. Mit Ausnahme der Wände 2 und 4 weisen die Wände des Gehäuses keine Öffnungen auf, durch die Luft hindurchtreten kann. Die Wände ohne Öffnungen sind also luftdicht. Die Länge der Dunstabzugshaube 1 ist sehr viel größer als die Höhe und die Breite der Dunstabzugshaube 1. Die Dunstabzugshaube 1 kann ca. 20 cm bis 30 cm lang sein. Die Dunstabzugshaube 1 kann ca. 6 cm bis 12 cm hoch sein. Die Dunstabzugshaube 1 kann ca. 6 cm bis 12 cm breit sein.

Innerhalb des Gehäuses der Dunstabzugshaube 1 befindet sich eine Saugeinrichtung und zwar ein Gebläse, ein Filter, eine Regeleinheit, mit dem der Betrieb des Gebläses geregelt werden kann, und eine Funkeinheit. Am Gehäuse der Dunstabzugshaube kann noch ein Ein- und Ausschalter angebracht sein. In der Dunstabzugshaube 1 ist eine wiederaufladbare Batterie vorhanden, mit der die Dunstabzugshaube 1 unabhängig von einer externen Stromquelle betrieben werden kann.

Die Dunstabzugshaube 1 ist klein und kompakt. Die Dunstabzugshaube 1 ist nicht dafür bestimmt und geeignet, dauerhaft, also stationär, unlösbar an einer Wand oder an einem Schrank befestigt zu werden. Stattdessen kann die Dunstabzugshaube 1 flexibel platziert werden. Die Dunstabzugshaube ist daher eine mobile Dunstabzugshaube.

Die Figur 2 zeigt eine Küchenmaschine 7 mit einem Speisenzubereitungsgefäß 8. Auf dem Speisenzubereitungsgefäß 8 ist ein Deckelteil 9 aufgesetzt. Das Deckelteil 9 für das Speisenzubereitungsgefäß 8 ist durch Arme 10, verriegelt. Das Deckelteil 9 befindet sich zwischen den beiden Armen 10. Die Arme 10 können um ihre Längsachse durch einen Motor der Küchenmaschine gedreht werden und so hin und her zwischen einer Öffnungsstellung und einer Verriegelungsstellung. Das Deckelteil 9 hat einen Sensor und zwar einen Kipphebel 11 eines elektrischen Schalters heruntergedrückt und so ausgelöst. Die Arme 10 und der Kipphebel 11 sind an einem Standteil 12 der Küchenmaschine 7 angebracht. Das Speisenzubereitungsgefäß 8 ist in das Standteil 12 eingesetzt und kann aus dem Standteil 12 herausgenommen werden. Um das Speisenzubereitungsgefäß 8 herausnehmen zu können, umfasst dieses einen Griff 13. Das Standteil 12 umfasst zur Bedienung ein berührungsempfindliches Display 14 und einen Drehschalter 15. Der Drehschalter 15 kann gedreht und gedrückt werden. Display 14 und Drehschalter 15 sind also Bedienelemente der Küchenmaschine 7. Über die Bedienelemente 14 und 15 können Daten eingegeben werden. Das Deckelteil 9 umfasst mittig eine Öffnung 16, die mit einem nicht gezeigten zum Beispiel gefäßartigen Verschluss verschlossen werden kann.

Im Standteil 12 befindet sich eine Steuereinrichtung 17. Im Standteil 12 befindet sich eine Funkeinheit 18, über die Daten drahtlos gesendet und empfangen werden können. Die Funkeinheit 18 kann beispielsweise per Bluetooth und/oder WiFi Daten senden sowie empfangen. Über die Funkeinheit 18 kann die Steuereinrichtung 17 beispielsweise auf ein extern elektronisch gespeichertes Rezept zugreifen. Die Steuereinrichtung 17 kann mithilfe des Rezepts die Zubereitung einer Speise steuern. Über die Funkeinheit 18 kann die Steuereinrichtung 17 mit der Dunstabzugshaube 1 drahtlos Daten austauschen, also kommunizieren. Rezepte können aber auch in einer Speichereinheit der Steuereinrichtung alternativ oder ergänzend gespeichert sein. Die Steuereinrichtung 17 kann den Betrieb der Dunstabzugshaube 1 steuern.

Im Speisenzubereitungsgefäß 8 befindet sich ein Schneidwerkzeug, das mit einem Motor angetrieben werden kann. Der Motor befindet sich im Standteil 12. Im Grund des Speisenzubereitungsgefäßes 8 ist eine Heizeinrichtung vorhanden, die mit dem Standteil 12 für ein Erhitzen stromleitend verbunden werden kann. Im Standteil ist außerdem der Motor für das Drehen der Arme 10 angeordnet.

Das Standteil 12 weist an seiner Oberseite einen Griff 19 auf. An dem Griff 19 kann die Dunstabzugshaube 1 zum Beispiel mithilfe einer Klammer der Dunstabzugszugshaube befestigt werden. Das Deckelteil 9 weist einen nach oben vorstehenden, ringförmigen Kragen 20 auf. An dem Kragen 20 kann die Dunstabzugshaube 1 beispielsweise mithilfe einer Klammer der Dunstabzugszugshaube befestigt werden. In beiden Fällen befindet sich die Dunstabzugshaube unmittelbar bei dem Bereich, bei dem Dunst aus dem Speisenzubereitungsgefäß 8 austreten kann.

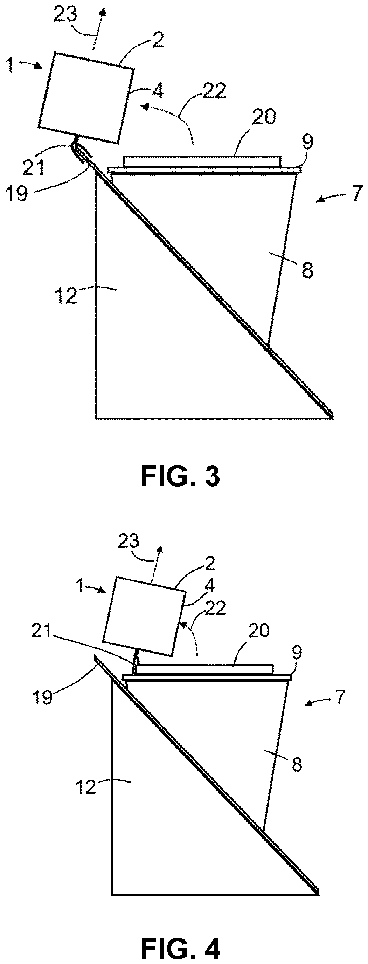

In der Figur 3 wird in einer seitlichen Ansicht die Küchenmaschine 7 mit der daran angebrachten Dunstabzugshaube 1 skizziert. Die Dunstabzugshaube 1 ist mit einer Klammer 21 an dem Griff 19 des Standteils 12 der Küchenmaschine 7 befestigt. Die Klammer 21 kann schwenkbar mit dem Gehäuse der Dunstabzugshaube 1 verbunden sein. Die Klammer 21 ist an der Unterseite der Dunstabzugshaube 1 befestigt. Die Wand 4 mit dem Lufteinlass der Dunstabzugshaube 1 ist in Richtung des Deckelteils 9 des Speisenzubereitungsgefäßes 8 geneigt. Während einer Zubereitung einer Speise kann aus dem Speisenzubereitungsgefäß 8 austretender Dunst 22 von der Dunstabzugshaube 1 angesaugt werden. Gereinigte Luft 23 wird nach oben aus der Dunstabzugshaube 1 herausgeblasen. Dadurch wird vermieden, dass eine ggfs. vorhandene rückseitige Küchenwand oder Wand eines Küchenschranks dem austretenden Luftstrom unmittelbar ausgesetzt ist. Auch steht die Rückseite für eine Befestigungseinrichtung zur Verfügung, mit der die Dunstabzugshaube 1 an einer Wand lösbar befestigt werden kann.

In der Figur 4 wird das Anbringen der Dunstabzugshaube 1 an dem Kragen 20 des Deckelteils 9 dargestellt. Die Klammer 21 umklammert dann den Kragen 20.

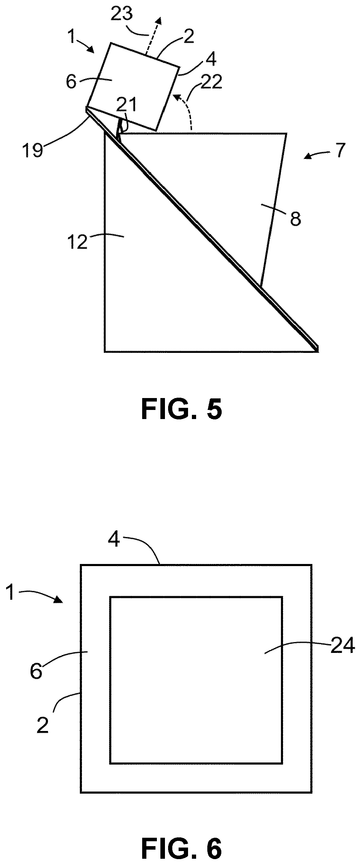

In der Figur 5 wird das Anbringen der Dunstabzugshaube 1 an dem Speisenzubereitungsgefäß 8 dargestellt. Die Klammer 21 umklammert dann den oberen Rand des Speisenzubereitungsgefäßes 8.

Die Figur 6 zeigt eine Aufsicht auf eine Stirnseite 6 einer Ausführungsform der Dunstabzugshaube 1. Bei dieser Stirnseite 6 ist ein Standfuß 24 integriert, der aus der Stirnseite 6 herausgezogen werden kann. Der Standfuß kann beispielsweise zwischen einer Ausgangsstellung und einer Endstellung hin- und her bewegt werden. Der Standfuß 24 kann gegenüber der Stirnseite dauerhaft vorstehen, um ergriffen und verschoben werden zu können. Der Standfuß steht dann auch in der Ausgangsstellung gegenüber der Stirnseite 6 hervor. Es ist möglich, dass beispielsweise durch einen Rastmechanismus, einen Klemmmechanismus oder mithilfe von Magnetkräften der Standfuß 24 in einer frei wählbaren Stellung zwischen der Ausgangsstellung und der Endstellung fixiert werden kann. Es ist möglich, dass beispielsweise durch einen Rastmechanismus oder mithilfe von magnetischen Kräften der Standfuß 24 stufenweise zwischen der Ausgangsstellung und der Endstellung fixiert werden kann.

Es ist möglich, dass die Unterseite des Standfußes 24 bündig mit der Oberfläche der Stirnseite 6 abschließt, wenn der Standfuß 24 in seine Ausgangsstellung gebracht worden ist. Beispielsweise durch Antippen des Standfußes 24 kann der Standfuß 24 beispielsweise mithilfe einer vorgespannten Feder in eine herausgezogene Stellung bewegt werde, so zum Beispiel in seine Endstellung. Durch das Antippen wird dann ein Haltemechanismus deaktiviert. Wird der Standfuß 24 von der Ausgangsstellung gegen die Kraft der vorgespannten Feder in die Ausgangsstellung gedrückt, dann wird beispielsweise der Haltemechanismus aktiviert und der Standfuß in der Ausgangsstellung gehalten.

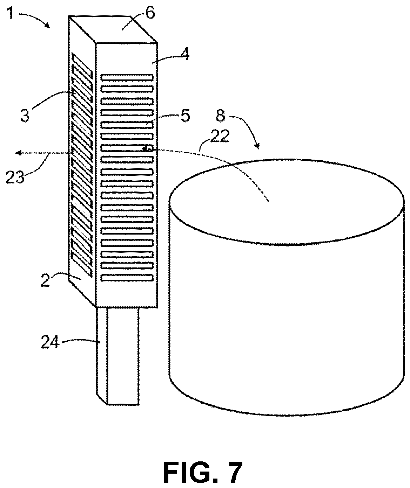

In der Figur 7 wird die Dunstabzugshaube 1 aus Figur 6 im hochkant aufgestellten Zustand gezeigt. Der Standfuß 24 ist in eine herausgezogene Stellung bewegt worden. Die herausgezogene Stellung kann die Endstellung sein. Der Standfuß 24 steht auf einem Untergrund neben einem Speisenzubereitungsgefäß 8. Es kann nun in optimierter Weise Dunst 22 aus dem Speisenzubereitungsgefäß 8 in die Dunstabzugshaube 1 eingesaugt werden und zwar durch das Gitter 5 hindurch. Luft 23 kann in gereinigter Form aus der Dunstabzugshaube 1 herausgeblasen werden und zwar durch das Gitter 3 hindurch.

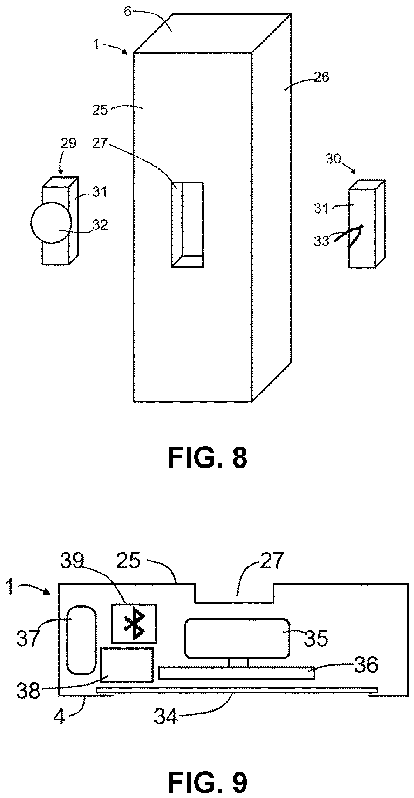

In der Figur 8 wird eine Ausführungsform einer Dunstabzugshaube gezeigt und zwar im Vergleich zu den Darstellungen in den Figuren 1 und 7 von der Rückseite. Die Wand 25 liegt der in den Figuren 1 und 7 gezeigten Wand 4 gegenüber. Die Wand 26 liegt der in den Figuren 1 und 7 gezeigten Wand 2 gegenüber. Die Wände 25 und 26 sind luftdicht geschlossen. Die Wand 25 weist ein Einschubfach 27 auf. In dieses Einschubfach 27 kann wahlweise die Befestigungseinrichtung 29 oder die Befestigungseinrichtung 30 hineingeschoben werden. Die Befestigungseinrichtung 29 weist ein Basisteil 21 und einen Saugnapf 32 auf. Die Befestigungseinrichtung 30 weist ein Basisteil 21 und eine Klammer 33 auf. Ein jedes Basisteil 31 ist so an das Einschubfach angepasst, dass ein jedes Basisteil 31 in das Einschubfach 27 hineingeschoben werden kann. Es kann einen Rückhaltemechanismus geben, der ein Basisteil 31 in dem Einschubfach 27 halten kann. Ein Rastmechanismus kann den Rückhaltemechanismus bilden. Ein Klettverschluss ist möglich, durch den ein Basisteil in dem Einschubfach gehalten werden kann. Ein Basisteil 31 kann alternativ oder ergänzend magnetisch in dem Einschubfach 27 gehalten werden.

Anstelle eines Einschubfachs kann ein anderer Mechanismus an der Wand 25 und/oder der Wand 26 vorhanden sein, um Befestigungseinrichtungen 29, 30 befestigen und leicht austauschen zu können. Der andere Mechanismus kann beispielsweise eine Schiene mit einem Rastmechanismus umfassen. Die Befestigungseinrichtungen 29, 30 können damit korrespondierend Formschlusselemente aufweisen, durch die eine jede Befestigungseinrichtung eine Schiene für ein befestigen entlang bewegt werden kann, bis der Rastmechanismus einrastet. Der Rastmechanismus kann dann wieder entrastet werden, um eine Befestigungseinrichtung austauschen zu können.

Der andere Mechanismus kann durch magnetische Verbindungen realisiert sein.

Die Figur 9 skizziert in einer Schnittdarstellung eine Dunstabzugshaube 1 mit einem Filter 34 hinter der Einlassöffnung. Hinter dem Filter 34 befindet sich ein Gebläse mit einem Laufrad bzw. Flügelrad 36 und einem damit verbundenen Elektromotor 35. Innerhalb des Gehäuses der Dunstabzugshaube 1 sind außerdem eine Batterie 37, eine Funkeinheit 39 und eine Regeleinheit 38 angeordnet. Die Funkeinheit 39 kann eine Bluetooth-Funkeinheit sein.

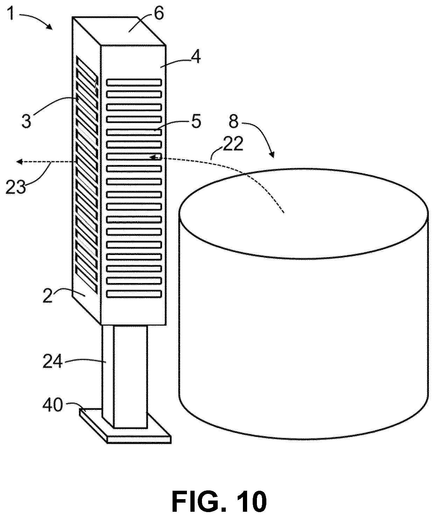

In der Figur 10 wird eine Dunstabzugshaube 1 mit einem Standfuß 24 gezeigt, der an seiner Unterseite eine Platte 40 umfasst, um die Standsicherheit zu verbessern. Die Platte 40 kann aus Metall bestehen, um die Standsicherheit weiter zu verbessern. Die Länge und Breite der Platte 40 kann der Länge und Breite der Stirnseite entsprechen. Beispielsweise kann der Standfuß 24 in Richtung Stirnseite 6 bewegt werden, bis die Platte 40 die Stirnseite 6 kontaktiert. Es kann dann die Platte 40 ergriffen werden, um den Standfuß wieder herausziehen zu können.

Es ist möglich, dass die Stirnseite 6 ein Einschubfach aufweist, in das ein Ende des Standfußes lösbar hineingeschoben werden kann. Der Standfuß kann dann beispielsweise vollständig von dem Gehäuse der Dunstabzugshaube gelöst und separat aufbewahrt werden.

## Patentansprüche

1. Mobile Dunstabzugshaube (1) mit einem Gehäuse (2, 4, 6), einem Filter (34) und einer Saugeinrichtung (35, 36), wobei Filter (34) und Saugeinrichtung (35, 36) im Gehäuse (2, 4, 6) angeordnet sind, wobei das Gehäuse (2, 4, 6) einen Einlass (5) für Luft aufweist, wobei die Saugeinrichtung (35, 36) so eingerichtet ist, dass die Saugeinrichtung (35, 36) Luft von außen durch den Lufteinlass (5) und durch das Filter (34) hindurch fördern kann, **dadurch gekennzeichnet, dass** die Dunstabzugshaube (1) länger als hoch und breit ist und nicht länger als 60 cm oder nicht länger als 50 cm oder nicht länger als 40 cm ist.

2. Mobile Dunstabzugshaube (1) nach dem vorhergehenden Anspruch, **dadurch gekennzeichnet, dass** die Dunstabzugshaube (1) eine Befestigungseinrichtung (21, 29, 30) umfasst, mit der die Dunstabzugshaube (1) an einem Speisenzubereitungsgefäß (8), an einem Speisenzubereitungsgerät (7) oder an einer Wand lösbar befestigt werden kann.

3. Mobile Dunstabzugshaube (1) nach dem vorhergehenden Anspruch, **dadurch gekennzeichnet, dass** die Befestigungseinrichtung (21, 29, 30) eine Klammer (21) oder einen Saugnapf (32) umfasst.

4. Mobile Dunstabzugshaube (1) nach einem der zwei vorhergehenden Ansprüche, **dadurch gekennzeichnet, dass** die Befestigungseinrichtung (21, 29, 30) schwenkbar und/oder drehbar an dem Gehäuse (2, 4, 6) der Dunstabzugshaube (1) befestigt ist.

5. Mobile Dunstabzugshaube (1) nach einem der drei vorhergehenden Ansprüche, **dadurch gekennzeichnet, dass** die Befestigungseinrichtung (21, 29, 30) an einer luftdichten Gehäusewand (25, 26) der Dunstabzugshaube (1) befestigt ist.

6. Mobile Dunstabzugshaube (1) nach dem vorhergehenden Anspruch, **dadurch gekennzeichnet, dass** die Wand (2, 4), die der Gehäusewand mit der daran befestigten Befestigungseinrichtung (21, 29, 30) gegenüberliegt, ein Gitter (3, 4) oder ein Sieb umfasst.

7. Mobile Dunstabzugshaube (1) nach einem der vorhergehenden Ansprüche, **dadurch gekennzeichnet, dass** zwei aneinander angrenzende Wände (2, 4) der Dunstabzugshaube (1) jeweils ein Gitter (3, 5) oder ein Sieb umfassen.

8. Mobile Dunstabzugshaube (1) nach einem der vorhergehenden Ansprüche, **dadurch gekennzeichnet, dass** die Dunstabzugshaube (1) wenigstens doppelt so lang wie hoch ist und/oder wenigstens doppelt so lang wie breit ist.

9. Mobile Dunstabzugshaube (1) nach einem der vorhergehenden Ansprüche, **dadurch gekennzeichnet, dass** die Dunstabzugshaube (1) einen ausziehbaren Standfuß (24) umfasst.

10. Mobile Dunstabzugshaube (1) nach dem vorhergehenden Anspruch, **dadurch gekennzeichnet, dass** der Standfuß (24) an einer Stirnseite (6) der Dunstabzugshaube (1) angeordnet ist.

11. Mobile Dunstabzugshaube (1) nach einem der vorhergehenden Ansprüche, **dadurch gekennzeichnet, dass** die Dunstabzugshaube (1) einen Feuchtigkeitssensor, einen Temperatursensor, einen Drucksensor, einen Gassensor und/oder einen Abstandssensor umfasst.

12. Mobile Dunstabzugshaube (1) nach dem vorhergehenden Anspruch, **dadurch gekennzeichnet, dass** die Dunstanzugshaube so eingerichtet ist, dass der Betrieb der Dunstanzugshaube in Abhängigkeit von einem Messwert eines Sensors gesteuert werden kann.

13. System umfassend eine mobile Dunstabzugshaube (1) gemäß einem der vorhergehenden Ansprüche und ein Speisenzubereitungsgerät (7), wobei das Speisenzubereitungsgerät (7) und die Dunstabzugshaube (1) so eingerichtet sind, dass der Betrieb der Dunstabzugshaube (1) durch das Speisenzubereitungsgerät (7) gesteuert wird.

14. System nach dem vorhergehenden Anspruch, **dadurch gekennzeichnet, dass** das Speisenzubereitungsgerät (7) so eingerichtet ist, dass das Speisenzubereitungsgerät (7) auf ein elektronisch gespeichertes Rezept zugreifen kann und dass das Speisenzubereitungsgerät (7) die Dunstabzugshaube (1) in Abhängigkeit von dem elektronisch gespeicherten Rezept steuert.

15. Verfahren für die Zubereitung einer Speise, bei dem eine Dunstabzugshaube (1) nach einem der Ansprüche 1 bis 12 an einem Speisenzubereitungsgerät (7) lösbar angebracht wird und nach dem lösbaren Anbringen eine Speise durch das Speisenzubereitungsgerät (7) durch Erhitzen zubereitet wird.
